# EUROPÄISCHE PATENTSCHRIFT

(11) **EP 2 178 721 B1**
(45) Veröffentlichungstag und Bekanntmachung des Hinweises auf die Patenterteilung: **26.10.2011**
(21) Anmeldenummer: 08786487.2
(22) Anmeldetag: 28.07.2008
(51) Int. Cl.: B60R 11/02, B60R 11/00

(54) **DACHMODULANORDNUNG**
ROOF MODULE ARRANGEMENT
ENSEMBLE MODULE DE TOIT

(30) Priorität: 20.08.2007 DE 102007039251
(43) Veröffentlichungstag der Anmeldung: 28.04.2010
(73) Patentinhaber: Continental Automotive GmbH, 30165 Hannover (DE)
(72) Erfinder: THIEL, Kerstin, 60385 Frankfurt (DE); WILLNAUER, Bernhard, 35418 Buseck-Beuern (DE)
(86) Internationale Anmeldenummer: PCT/EP2008/059841
(87) Internationale Veröffentlichungsnummer: WO 2009/024430

(56) Entgegenhaltungen:
- EP-A- 1 086 859
- JP-A- 8 150 879
- JP-A- 2007 015 457
- US-A- 5 822 023
- US-A1- 2002 085 129
- US-A1- 2005 122 670

## Beschreibung

Die Erfindung bezieht sich auf eine Dachmodulanordnung mit einem in einem Fahrgastraum eines Kraftfahrzeugs an einem Dachquerträger, insbesondere dem Dachquerträger zwischen den A-Säulen, in einer Einbauposition durch verbindungselemente befestigbaren Dachmodul, das eine Bedieneinheit und/oder einen Rückspiegel sowie Schnittstellen zur elektrischen Verbindung mit einem Bordnetz des Kraftfahrzeugs aufweist, wobei das Dachmodul mittels einer oder mehreren Montageverbindungen in einer der Einbauposition nahen Montageposition an dem Dachquerträger anordenbar ist, wobei in der Montageposition das Dachmodul einen Abstand zum Dachquerträger aufweist und die Montageverbindungen Hängeverbindungen sind, die an dem Dachquerträger oder dem Dachmodul angeordnete Hängehalterungen und an dem Dachmodul oder dem Dachquerträger angeordnete, in die Hängehalterungen einhängbare Hängeelemente aufweisen. Derartige Anordnungen sind aus der EP 1 086 859 A und JP 08150879 A bekannt.

Bei derartigen Dachmodulanordnungen ist es bekannt, diese mittels einer Klipsverbindung an dem Dachhimmel nahe der Windschutzscheibe zu befestigen.

Zur elektrischen Verbindung mit dem Bordnetz werden vorher Stecker an den Enden von Kabeln des Kabelbaumes in entsprechende Steckanschlüsse auf der dem Fahrgastraum abgewandten Seite des Dachmoduls eingesteckt.

Durch die Vielzahl von Komponenten, die ein Dachmodul aufweist, ist dessen Gewicht hoch, so dass die Montage des Dachmoduls unkomfortabel ist, zumal sie eine Über-Kopf-Montage erfordert.

Aufgabe der Erfindung ist es daher, eine Dachmodulanordnung der eingangs genannten Art zu schaffen, die eine leichte Montierbarkeit des Dachmoduls ermöglicht.

Diese Aufgabe wird erfindungsgemäß durch eine Dachmodulanordnung mit den Merkmalen des Anspruchs 1 gelöst.

Durch diese Ausbildung ist es möglich zunächst das Dachmodul in der Montageposition zu befestigen.

Da das Dachmodul nun nicht mehr von dem Monteur nahe der Einbauposition gehalten und gleichzeitig die elektrischen Verbindungen hergestellt werden müssen, hat der Monteur nun beide Hände zur Kontaktierung mit dem Bordnetz frei.

Erst nach vollzogener Kontaktierung wird das Dachmodul aus der Montageposition in die dazu nahe Einbauposition gebracht und an dem Dachquerträger befestigt.

Dabei können die Montageverbindungen an der dem Dachmodul zugewandten Seite des Dachquerträgers und/oder an der der dem Dachquerträger zugewandten Seite des Dachmoduls angeordnet sein.

Besonders einfach aufgebaute Montageverbindungen sind dadurch gegeben, dass die Montageverbindungen Hängeverbindungen sind, die an dem Dachquerträger oder dem Dachmodul angeordnete Hängehalterungen und an dem Dachmodul oder dem Dachquerträger angeordnete, in die Hängehalterungen einhängbare Hängeelemente aufweisen.

Durch einfaches Einhängen der Hängeelemente in die Hängehalterungen ist das Dachmodul in seiner Montageposition angeordnet.

Sind die Hängehalterungen oder Hängeelemente in einem Abstand zueinander auf einer Geraden an dem Dachquerträger angeordnet, die sich in Längserstreckungsrichtung des Dachquerträgers erstreckt, so kann das Dachmodul zur besseren Erreichbarkeit seiner Schnittstellen um die durch die Gerade definierte Schwenkachse geschwenkt werden.

Ein selbsttätiges Schwenken um diese Schwenkachse und damit eine weitere Montageerleichterung ergibt sich, wenn sich der Schwerpunkt des Dachmoduls in einem Abstand zur Geraden auf der dem Fahrgastraum zugewandten Seite der Geraden befindet.

Besitzen die Hängehalterungen Führungen, an denen das Dachmodul mit den Hängeelementen aus der Montageposition in die Einbauposition bewegbar geführt ist, so erfolgt nach der Kontaktierung eine zwangsgeführte korrekte Zuführung des Dachmoduls aus der Montageposition in die Einbauposition, um dort nur noch befestigt werden zu müssen.

In einfach aufgebauter und montageerleichternder Ausbildung können die Hängehalterungen mit ihrem einen Ende an dem Dachquerträger befestigte, sich zumindest annähernd horizontal erstreckende Haltezapfen sein, auf die Hängelaschen mit sich zumindest annähernd vertikal erstreckenden Laschenausnehmungen aufsetzbar sind.

Eine einfache Führung des Dachmoduls aus der Montageposition in die Einbauposition ist dadurch möglich, dass die Laschenausnehmungen als Laschenschlitze mit einer der Dicke des Haltezapfens entsprechenden Schlitzbreite ausgebildet sind und an ihren dem Dachquerträger näheren Enden Schlitzerweiterungen aufweisen, durch die Zapfenerweiterungen an den freien Enden der Haltezapfen hindurchführbar sind.

Eine positionsgenaue Anordnung in der Einbauposition wird dadurch erreicht, dass das Dachmodul an seiner dem Dachquerträger zugewandten Seite zum Dachquerträger hin hervorstehende Abstützdome aufweist, über die das Dachmodul in der Einbauposition am Dachquerträger in Anlage ist.

Zur Vermeidung einer Überbestimmung und von Vibrationen durch die Fahrbewegungen des Kraftfahrzeugs sind vorzugsweise drei in einem Dreieck positionierte Abstützdome vorhanden.

Ist dabei das Dachmodul in in der Einbauposition ausschließlich über die Abstützdome am Dachquerträger in Anlage, so verbleibt in der Einbausposition außer der Anlage an den Abstützdomen ein Spalt zwischen dem Dachmodul und dem Dachquerträger, der sicherstellt, dass die Auflage auf den Abstützdomen korrekt ist.

In kinematischer Umkehrung mit denselben Vorteilen kann auch der Dachquerträger an seiner dem Dachmodul zugewandten Seite zum Dachmodul hin hervorstehende Abstützdome aufweisen, an denen das Dachmodul in der Einbauposition in Anlage ist, wobei vorzugsweise das Dachmodul in der Einbauposition ausschließlich an den Abstützdomen in Anlage ist.

In bauteilsparender Doppelfunktion können die Hängelaschen die Abstützdome bilden.

Einfach montierbar und hoch belastbar können die Verbindungselemente Schrauben sein, die durch Ausnehmungen im Dachmodul ragen, mit ihrem Schraubenkopf an dem Dachmodul abstützbar und in Gewindebohrungen des Dachquerträgers einschraubbar sind.

Zur Abdeckung der Schraubenköpfe können die Ausnehmungen fahrgastraumseitig in Kammern des Dachmoduls münden, wobei die Kammern durch Abdeckkappen zum Fahrgastraum hin verschließbar sind.

Sind die Abdeckkappen an dem Dachmodul angelenkt und zwischen einer die Kammern öffnenden Offenposition und einer die Kammern abdeckenden Verschlussposition schwenkbar, so ist eine Vormontage der Abdeckklappen möglich, was bei der Montage des Dachmoduls nur noch ein Verschwenken aus der Offenposition in die Verschlussposition erfordert.

Um in der Einbauposition nicht sichtbar zu sein, sind vorzugsweise die Schnittstellen zur elektrischen Verbindung mit dem Bordnetz auf der dem Fahrgastraum abgewandten Seite des Dachmoduls angeordnet.

Dabei können die Schnittstellen zur elektrischen Verbindung mit dem Bordnetz Steckverbindungen sein.

Außer der z. B. ein Tastenfeld aufweisenden Bedieneinheit und dem Rückspiegel kann weiterhin das Dachmodul ein kamerabasierendes Fahrerassistenzsystem und/oder ein optisches Fahrzeuginsassen Klassifikationssystem und/oder einen Regensensor und/oder einen Beschlagsensor und/oder einen Lichtsensor und/oder ein Display und/oder eine Antenne aufweisen.

Gerade bei Dachmodulen mit vielen Komponenten, die zu einem hohen Gewicht des Dachmoduls führen, sind Montageverbindungen zur Halterung des Dachmoduls in der Montageposition von Vorteil.

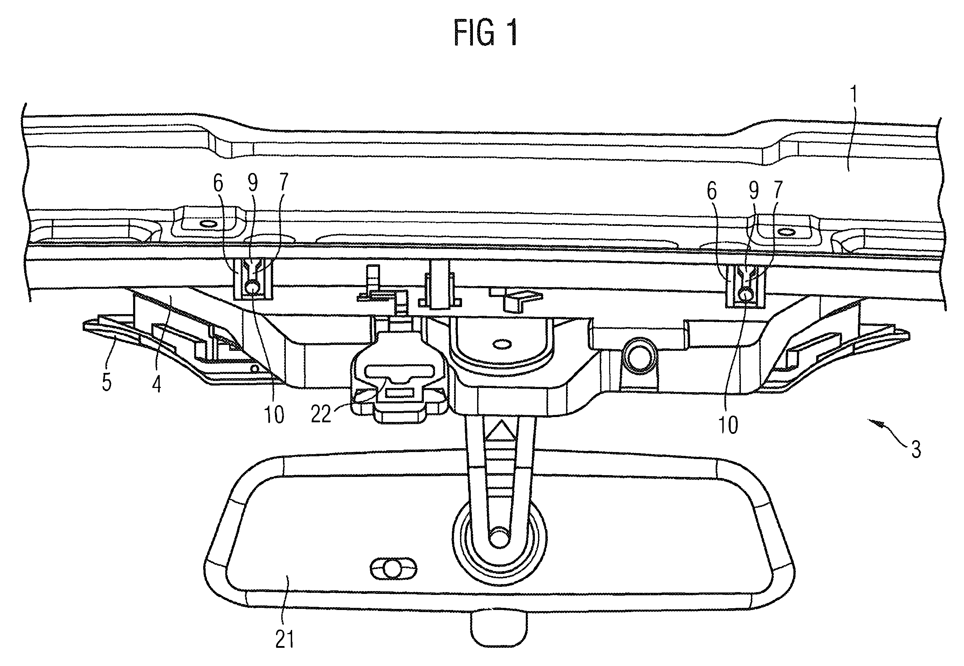

Ein Ausführungsbeispiel der Erfindung ist in der Zeichnung dargestellt und wird im folgenden näher beschrieben. Es zeigen
- Figur 1: eine Ansicht gegen Fahrtrichtung einer Dachmodulanordnung mit einem Dachmodul in der Einbauposition ;

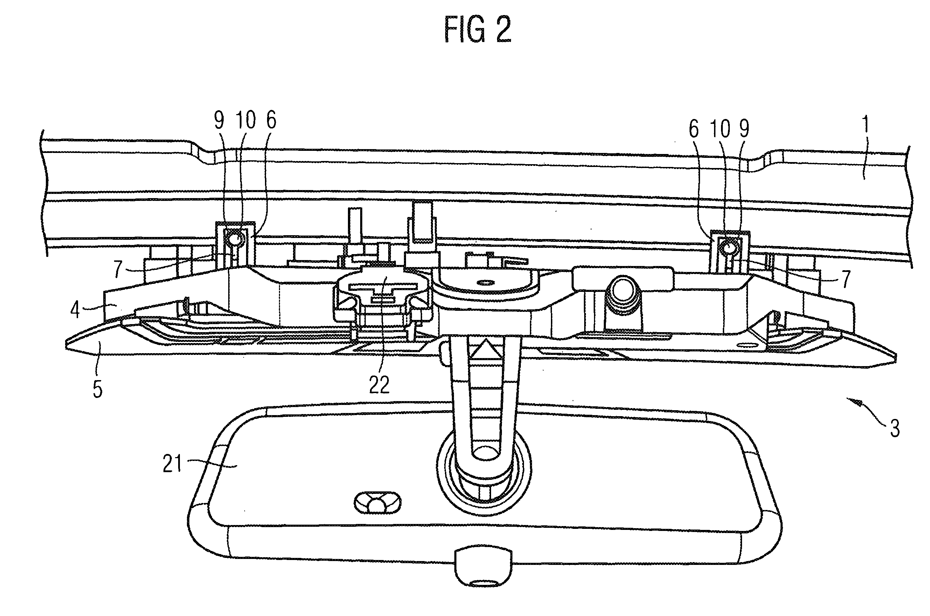

- Figur 2: eine Ansicht gegen Fahrtrichtung einer Dachmodulanordnung nach Figur 1 mit dem Dachmodul in der Montageposition;

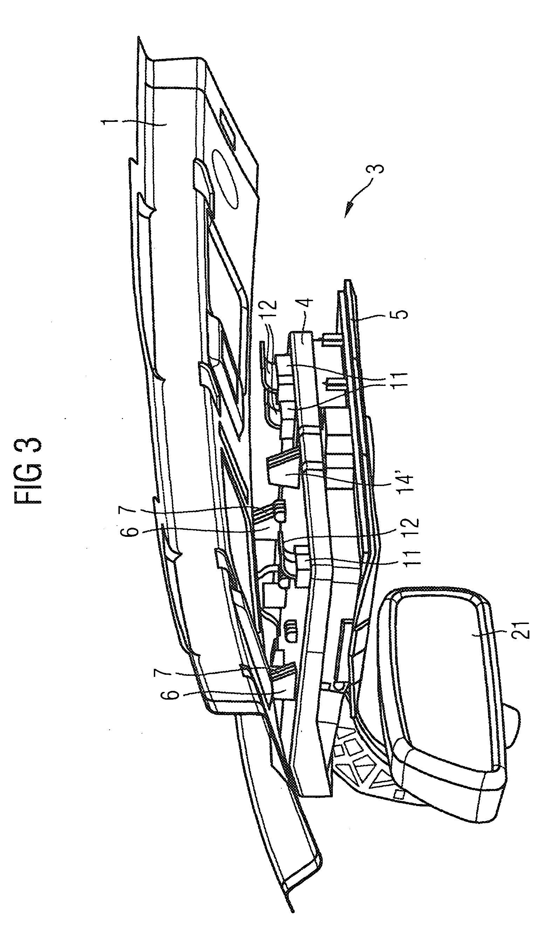

- Figur 3: eine perspektivische Ansicht der Dachmodulanordnung nach Figur 1 mit dem Dachmodul in der Montageposition;

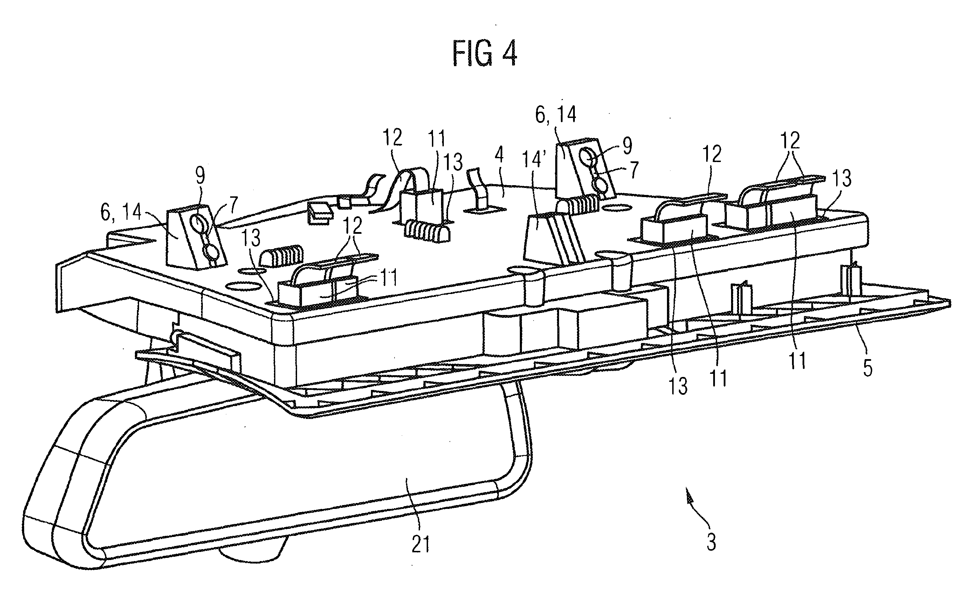

- Figur 4: eine perspektivische Ansicht des Dachmoduls der Dachmodulanordnung nach Figur 1;

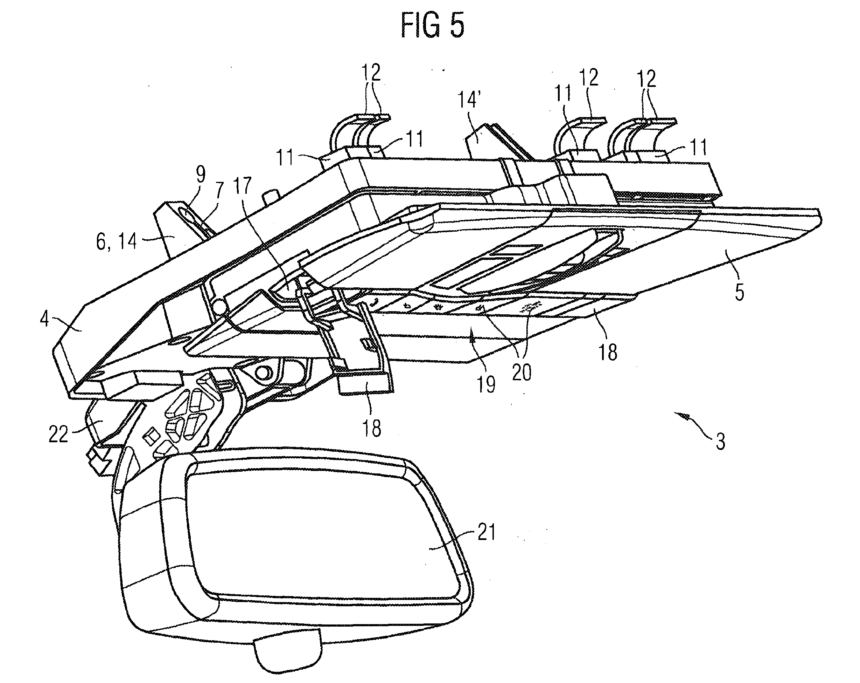

- Figur 5: eine weitere perspektivische Ansicht des Dachmoduls nach Figur 4;

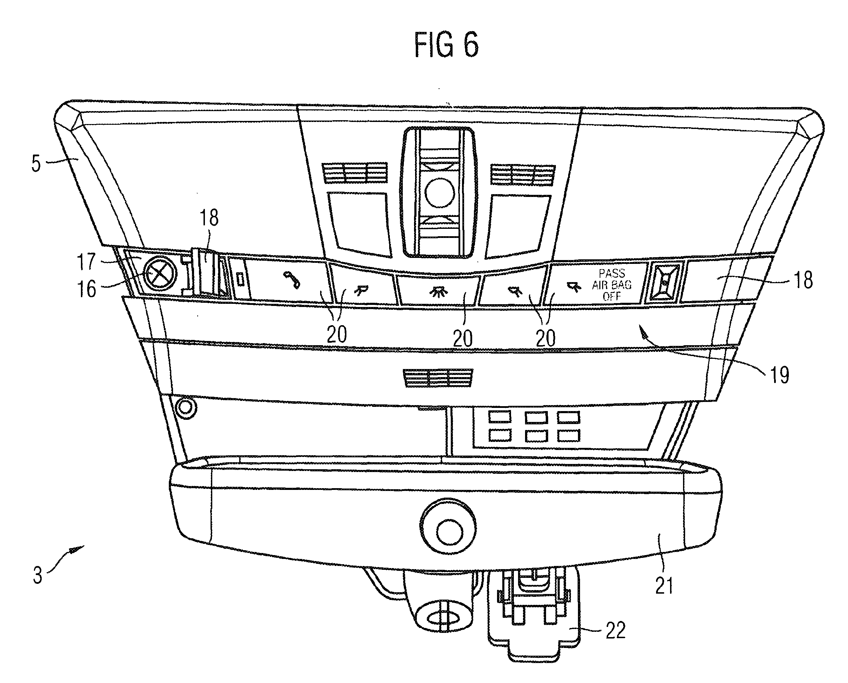

- Figur 6: eine Untenansicht des Dachmoduls nach Figur 4 und

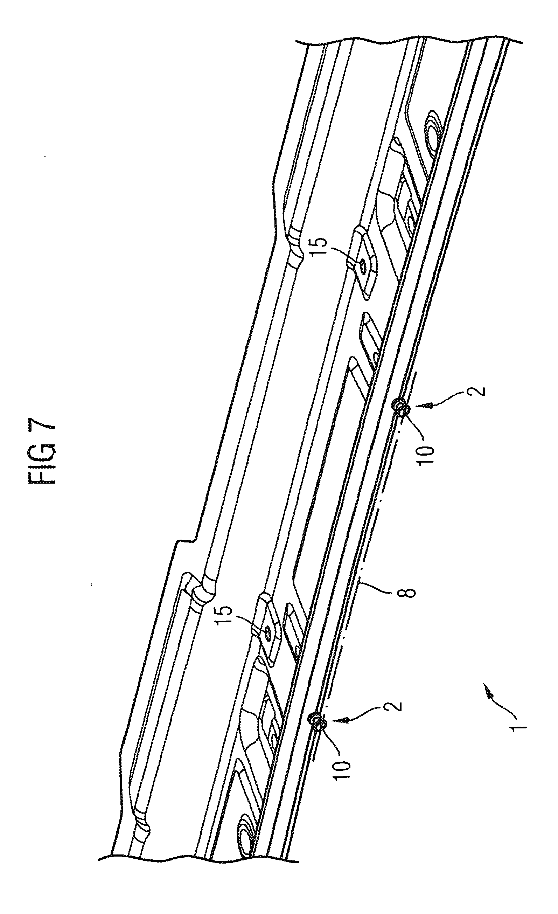

- Figur 7: eine perspektivische Ansicht eines Dachquerträgers der Dachmodulanordnung nach 1.

Die dargestellte Dachmodulanordnung weist einen Dachquerträger 1 zwischen den nicht dargestellten A-Säulen eines Kraftfahrzeugs auf.

Im Mittenbereich des Dachquerträgers 1 sind in einem Abstand voneinander Haltezapfen 2 z. B. durch Schweißen befestigt, die sich annähernd horizontal in den Fahrgastraum des Kraftfahrzeugs erstrecken.

Dabei sind die Haltezapfen 2 auf einer Geraden 8 an dem Dachquerträger 1 angeordnet, die sich in Längserstreckungsrichtung des Dachquerträgers 1 erstreckt.

Die Dachmodulanordnung weist weiterhin ein Dachmodul 3 auf, das einen Modulträger 4 besitzt, der auf seiner dem Fahrgastraum zugewandten Seite von einer Modulverkleidung 5 abgedeckt ist.

An der der Modulverkleidung 5 abgewandten Seite besitzt der Modulträger 4 zwei hervorstehende Hängelaschen 6, die in demselben Abstand wie die Haltezapfen 2 zueinander angeordnet sind.

Die Hängelaschen 6 sind mit Laschenschlitzen 7 versehen, die sich entsprechend der Hängelaschen 6 von dem Modulträger 4 weg erstrecken und eine Schlitzbreite besitzen, die der Dicke der Haltezapfen 2 entspricht.

An ihren den freien Enden der Hängelaschen 6 näheren Ende münden die Laschenschlitze 7 in Schlitzerweiterungen 9, durch die Zapfenerweiterungen 10 an den freien Enden der Haltezapfen 2 hindurchführbar sind.

Durch Aufstecken der Hängelaschen 6 mit ihren Zapfenerweiterungen 10 auf die Haltezapfen 2 ist das Dachmodul 3 in einer Montageposition an dem Dachquerträger 1 anhängbar.

In dieser Montageposition befindet sich das Dachmodul 3 in einem Abstand nahe der endgültigen Einbauposition.

Da der Schwerpunkt des Dachmoduls 3 sich in einem Abstand zur Geraden 8 auf der dem Fahrgastraum zugewandten Seite der Geraden 8 befindet, neigt sich das freihängende Dachmodul 3 auf der dem Fahrgastraum zugewandten Seite um einen Winkel nach unten, so dass die der Modulverkleidung 5 abgewandte Seite des Modulträgers 4 gut zugänglich ist.

Dadurch kann ein Monteur problemlos die Stecker 11 an den freien Enden der aus Ausnehmungen des Dachträgers 1 herausragenden Kabel 12 des Kabelbaums des Kraftfahrzeugs auf die Steckanschlüsse 13 auf der der Modulverkleidung 5 abgewandten Seite des Modulträgers 4 aufstecken.

Die Hängelaschen 6 ragen mit einer derartigen Neigung von dem Modulträger 4 hervor, dass sie sich bei in der Montageposition an den Haltezapfen 2 frei hängendem Dachmodul 3 vertikal erstrecken.

Sind die Stecker 11 auf die Steckanschlüsse 13 aufgesteckt und damit das Dachmodul 3 an das Bordnetz angeschlossen, wird das Dachmodul 3 zum Dachträger 1 hin verschoben.

Dabei bilden die Laschenschlitze 7 eine Führung, so dass das Dachmodul 3 zwangsweise in seine korrekte Einbauposition gelangt.

Der Bewegungsweg von der Montageposition in die Einbauposition entspricht annähernd der Länge der Laschenschlitze 7.

In dieser Einbauposition ist der Modulträger 4 über drei von dem Modulträger 4 hervorstehende Abstützdome 14, 14' an dem Dachquerträger 1 abgestützt.

Zwei dieser Abstützdome 14 sind durch die Hängelaschen 6 gebildet, während der dritte Abstützdom ein Dreieck mit den Positionen der Abstützdome 14 bildend an dem Modulträger 4 angeordnet ist.

Durch dies Anordnung der Abstützdome 14, 14' und die ausschließliche Abstützung über die Abstützdome 14, 14' an dem Dachquerträger 1 wird eine definierte, nicht überbestimmte Abstützung erreicht.

In dieser Einbauposition werden dann Schrauben durch Ausnehmungen im Modulträger 4 hindurchgeführt und in entsprechende Gewindebohrungen 15 des Dachquerträgers 1 eingeschraubt. Dabei sind die Schraubenköpfe 16 an dem Dachmodul 3 abstützbar und halten so das Dachmodul 3 sicher an dem Dachquerträger 1.

Im Bereich der Schraubenköpfe 16 der eingeschraubten Schrauben sind in der Modulverkleidung 5 zum Fahrgastraum hin offene Kammern 17 ausgebildet, die durch Abdeckkappen 18 zum Fahrgastraum hin verschließbar sind.

Dabei sind die Abdeckkappen 18 an der Modulverkleidung 5 angelenkt, so dass in deren Offenposition die Schrauben eingeschraubt und anschließend die Abdeckkappen 18 in ihre die Kammern 17 abdeckende Verschlussposition geschwenkt werden können.

Die Schraubenköpfe 16 sind dann vom Fahrgastraum her nicht mehr sichtbar.

Das Dachmodul 3 weist als Bedieneinheit eine Lichtleiste 19, mehrere Schaltertasten 20 sowie einen Rückspiegel 21 und einen Regen- und Beschlagssensor 22 auf.

## Patentansprüche

1. Dachmodulanordnung mit einem in einem Fahrgastraum eines Kraftfahrzeugs an einem Dachquerträger (1), insbesondere dem Dachquerträger (1) zwischen den A-Säulen, in einer Einbauposition durch Verbindungselemente befestigbaren Dachmodul (3), das eine Bedieneinheit und/oder einen Rückspiegel sowie Schnittstellen zur elektrischen Verbindung mit einem Bordnetz des Kraftfahrzeugs aufweist, wobei das Dachmodul (3) mittels einer oder mehreren Montageverbindungen in einer der Einbauposition nahen Montageposition an dem Dachquerträger (1) anordenbar ist, wobei in der Montageposition das Dachmodul (3) einen Abstand zum Dachquerträger (1) aufweist und die Montageverbindungen Hängeverbindungen sind, die an dem Dachquerträger (1) oder dem Dachmodul (3) angeordnete Hängehalterungen und an dem Dachmodul (3) oder dem Dachquerträger (1) angeordnete, in die Hängehalterungen einhängbare Hängeelemente aufweisen, **dadurch gekennzeichnet, dass** die Hängehalterungen Führungen besitzen, an denen das Dachmodul (3) mit den Hängeelementen aus der Montageposition in die Einbauposition bewegbar geführt ist.

2. Dachmodulanordnung nach Anspruch 1, **dadurch gekennzeichnet, dass** die Montageverbindungen an der dem Dachmodul (3) zugewandten Seite des Dachquerträgers (1) und/oder an der dem Dachquerträger (1) zugewandten Seite des Dachmoduls (3) angeordnet sind.

3. Dachmodulanordnung nach einem der vorhergehenden Ansprüche, **dadurch gekennzeichnet, dass** die Hängehalterungen oder Hängeelemente in einem Abstand zueinander auf einer Geraden (8) an dem Dachquerträger (1) angeordnet sind, die sich in Längserstreckungsrichtung des Dachquerträgers (1) erstreckt.

4. Dachmodulanordnung nach Anspruch 3, **dadurch gekennzeichnet, dass** sich der Schwerpunkt des Dachmoduls (3) in einem Abstand zur Geraden (8) auf der dem Fahrgastraum zugewandten Seite der Geraden (8) befindet.

5. Dachmodulanordnung nach einem der vorhergehenden Ansprüche, **dadurch gekennzeichnet, dass** die Hängehalterungen mit ihrem einen Ende an dem Dachquerträger (1) befestigte, sich zumindest annähernd horizontal erstreckende Haltezapfen (2) sind, auf die Hängelaschen (6) mit sich zumindest annähernd vertikal erstreckenden Laschenausnehmungen aufsetzbar sind.

6. Dachmodulanordnung nach Anspruch 5, **dadurch gekennzeichnet, dass** die Laschenausnehmungen als Laschenschlitze (7) mit einer der Dicke des Haltezapfens (2) entsprechenden Schlitzbreite ausgebildet sind und an ihren dem Dachquerträger (1) näheren Enden Schlitzerweiterungen (9) aufweisen, durch die Zapfenerweiterungen (10) an den freien Enden der Haltezapfen (2) hindurchführbar sind.

7. Dachmodulanordnung nach einem der vorhergehenden Ansprüche, **dadurch gekennzeichnet, dass** das Dachmodul (3) an seiner dem Dachquerträger (1) zugewandten Seite zum Dachquerträger (1) hin hervorstehende Abstützdome (14, 14') aufweist, über die das Dachmodul (3) in der Einbauposition am Dachquerträger (1) in Anlage ist.

8. Dachmodulanordnung nach Anspruch 7, **dadurch gekennzeichnet, dass** das Dachmodul (3) in der Einbauposition ausschließlich über die Abstützdome (14, 14') am Dachquerträger (1) in Anlage ist.

9. Dachmodulanordnung nach einem der Ansprüche 1 bis 6, **dadurch gekennzeichnet, dass** der Dachquerträger (1) an seiner dem Dachmodul (3) zugewandten Seite zum Dachmodul (3) hin hervorstehende Abstützdome aufweist, an denen das Dachmodul (3) in der Einbauposition in Anlage ist.

10. Dachmodulanordnung nach Anspruch 9, **dadurch gekennzeichnet, dass** das Dachmodul (3) in der Einbauposition ausschließlich an den Abstützdomen in Anlage ist.

11. Dachmodulanordnung nach einem der Ansprüche 7 bis 10, **dadurch gekennzeichnet, dass** die Hängelaschen (6) die Abstützdome (14) bilden.

12. Dachmodulanordnung nach einem der vorhergehenden Ansprüche, **dadurch gekennzeichnet, dass** die Verbindungselemente Schrauben sind, die durch Ausnehmungen im Dachmodul (3) ragen, mit ihrem Schraubenkopf (16) an dem Dachmodul (3) abstützbar und in Gewindebohrungen (15) des Dachquerträgers (1) einschraubbar sind.

13. Dachmodulanordnung nach Anspruch 12, **dadurch gekennzeichnet, dass** die Ausnehmungen fahrgastraumseitig in Kammern (17) des Dachmoduls (3) münden, wobei die Kammern (17) durch Abdeckkappen (18) zum Fahrgastraum hin verschließbar sind.

14. Dachmodulanordnung nach Anspruch 13, **dadurch gekennzeichnet, dass** die Abdeckkappen (18) an dem Dachmodul (3) angelenkt und zwischen einer die Kammern (17) öffnenden Offenposition und einer die Kammern (17) abdeckenden Verschlussposition schwenkbar sind.

15. Dachmodulanordnung nach einem der vorhergehenden Ansprüche, **dadurch gekennzeichnet, dass** die Schnittstellen zur elektrischen Verbindung mit dem Bordnetz auf der dem Fahrgastraum abgewandten Seite des Dachmoduls (3) angeordnet sind.

16. Dachmodulanordnung nach einem der vorhergehenden Ansprüche, **dadurch gekennzeichnet, dass** die Schnittstellen zur elektrischen Verbindung mit dem Bordnetz Steckverbindungen sind.

17. Dachmodulanordnung nach einem der vorhergehenden Ansprüche, **dadurch gekennzeichnet, dass** das Dachmodul (3) ein kamerabasierendes Fahrerassistenzsystem und/oder ein optisches Fahrzeuginsassen Klassifikationssystem und/oder einen Regensensor und/oder einen Beschlagsensor (22) und/oder einen Lichtsensor und/oder ein Display und/oder eine Antenne aufweist.

## Claims

1. Roof module arrangement with a roof module (3) which can be fastened in a fitted position to a roof cross member (1), in particular the roof cross member (1) between the A pillars in a passenger compartment of a motor vehicle, by means of connecting elements and which has an operating unit and/or a rear-view mirror, and also interfaces for the electrical connection to an electrical system of the motor vehicle, wherein the roof module (3) can be arranged on the roof cross member (1) in an assembly position, which is close to the fitted position, by means of one or more assembly connections, wherein, in the assembly position, the roof module (3) is at a distance from the roof cross member (1) and the assembly connections are hanging connections which have hanging mounts arranged on the roof cross member (1) or the roof module (3) and hanging elements which are arranged on the roof module (3) or on the roof cross member (1) and can be fitted into the hanging mounts, **characterized in that** the hanging mounts have guides at which the roof module (3) is guided in a movable manner by the hanging elements from the assembly position into the fitted position.

2. Roof module arrangement according to Claim 1, **characterized in that** the assembly connections are arranged on that side of the roof cross member (1) which faces the roof module (3) and/or on that side of the roof module (3) which faces the roof cross member (1).

3. Roof module arrangement according to one of the preceding claims, **characterized in that** the hanging mounts or hanging elements are arranged on the roof cross member (1) at a distance from one another on a straight line (8) which extends in the direction of longitudinal extent of the roof cross member (1).

4. Roof module arrangement according to Claim 3, **characterized in that** the centre of gravity of the roof module (3) is located at a distance from the straight line (8) on that side of the straight line (8) which faces the passenger compartment.

5. Roof module arrangement according to one of the preceding claims, **characterized in that** the hanging mounts are retaining pins (2) which are fastened at one end thereof to the roof cross member (1), extend at least approximately horizontally and onto which hanging tabs (6) having tab recesses extending at least approximately vertically can be placed.

6. Roof module arrangement according to Claim 5, **characterized in that** the tab recesses are designed as tab slots (7) with a slot width corresponding to the thickness of the retaining pin (2) and, at the ends thereof which are closer to the roof cross member (1), have widened slot portions (9) through which widened pin portions (10) at the free ends of the retaining pins (2) can be guided.

7. Roof module arrangement according to one of the preceding claims, **characterized in that** that side of the roof module (3) which faces the roof cross member (1) has supporting domes (14, 14') which protrude towards the roof cross member (1) and via which the roof module (3) is in contact with the roof cross member (1) in the fitted position.

8. Roof module arrangement according to Claim 7, **characterized in that**, in the fitted position, the roof module (3) is in contact with the roof cross member (1) exclusively via the supporting domes (14, 14').

9. Roof module arrangement according to one of Claims 1 to 6, **characterized in that** that side of the roof cross member (1) which faces the roof module (3) has supporting domes which protrude towards the roof module (3) and with which the roof module (3) is in contact in the fitted position.

10. Roof module arrangement according to Claim 9, **characterized in that**, in the fitted position, the roof module (3) is in contact exclusively with the supporting domes.

11. Roof module arrangement according to one of Claims 7 to 10, **characterized in that** the hanging tabs (6) form the supporting domes (14).

12. Roof module arrangement according to one of the preceding claims, **characterized in that** the connecting elements are screws which protrude through recesses in the roof module (3), can be supported with the screw head (16) thereof on the roof module (3) and can be screwed into threaded bores (15) in the roof cross member (1).

13. Roof module arrangement according to Claim 12, **characterized in that** the recesses open out on the passenger compartment side into chambers (17) of the roof module (3), the chambers (17) being closeable to the passenger compartment by means of covering caps (18).

14. Roof module arrangement according to Claim 13, **characterized in that** the covering caps (18) are coupled to the roof module (3) and can be pivoted between an open position opening the chambers (17) and a closure position covering the chambers (17).

15. Roof module arrangement according to one of the preceding claims, **characterized in that** the interfaces to the electrical connection to the electrical system are arranged on that side of the roof module (3) which faces away from the passenger compartment.

16. Roof module arrangement according to one of the preceding claims, **characterized in that** the interfaces of the electrical connection to the electrical system are plug-in connections.

17. Roof module arrangement according to one of the preceding claims, **characterized in that** the roof module (3) has a camera-based driver assistance system and/or an optical vehicle-occupant classification system and/or a rain sensor and/or a misting-up sensor (22) and/or a light sensor and/or a display and/or an antenna.

## Revendications

1. Ensemble formant module de toit et comprenant un module (3) de toit, qui peut être fixé dans un habitacle d'un véhicule automobile sur une traverse (1) de toit, notamment sur la traverse (1) de toit entre les montants A en une position d'installation par des éléments de liaison, et qui a une unité de commande et/ou un rétroviseur ainsi que des interfaces pour la liaison électrique avec un réseau de bord du véhicule automobile, dans lequel le module (3) de toit peut être mis sur la traverse (1) de toit en une position de montage proche de la position d'installation au moyen d'une ou de plusieurs liaisons de montage, dans lequel, dans la position de montage, le module (3) de toit est à distance de la traverse (1) de toit et les liaisons de montage sont des liaisons de suspension, qui ont des fixations de suspension disposées sur la traverse (1) de toit ou sur le module (3) de toit et des éléments de suspension disposés sur le module (3) de toit ou sur la traverse (1) de toit et pouvant être suspendus dans les fixations de suspension, **caractérisé en ce que** les fixations de suspension ont des guidages, sur lesquels le module (3) de toit avec les éléments de suspension peut passer de la position de montage à la position d'installation.

2. Ensemble formant module de toit suivant la revendication 1, **caractérisé en ce que** les liaisons de montage sont disposées du côté de la traverse (1) de toit tourné vers le module (3) de toit et/ou du côté du module (3) de toit tourné vers la traverse (1) de toit.

3. Ensemble formant module de toit suivant l'une des revendications précédentes, **caractérisé en ce que** les fixations de suspension ou les éléments de suspension sont disposés à distance les uns des autres sur une droite sur la traverse (1) de toit, droite qui s'étend dans la direction d'étendue longitudinale de la traverse (1) de toit.

4. Ensemble formant module de toit suivant la revendication 3, **caractérisé en ce que** le centre de gravité du module (3) de toit se trouve à distance de la droite (8) du côté de la droite (8) tourné vers l'habitacle.

5. Ensemble formant module de toit suivant l'une des revendications précédentes, **caractérisé en ce que** les fixations de suspension sont des tenons (2) de maintien, qui sont fixés par l'une de leurs extrémités à la traverse (1) de toit, qui s'étendent au moins à peu près horizontalement et sur lesquels des éclisses (6) de suspension, ayant des évidements s'étendant au moins à peu près verticalement, peuvent être mises.

6. Ensemble formant module de toit suivant la revendication 5, **caractérisé en ce que** les évidements d'éclisse sont constitués sous la forme de fentes (7) d'éclisse ayant une largeur de fente correspondant à l'épaisseur du tenon (2) de maintien et ont à leurs extrémités proches de la traverse (1) de toit des élargissements (9) de fente, dans lesquels des élargissements (10) de tenon aux extrémités libres des tenons (2) de maintien peuvent passer.

7. Ensemble formant module de toit suivant l'une des revendications précédentes, **caractérisé en ce que** le module (3) de toit a du côté tourné vers la traverse (1) de toit des dômes (14, 14') d'appui en saillie en direction de la traverse (1) de toit, par lesquels le module (3) de toit est en la position d'installation, appliqué à la traverse (1) de toit.

8. Ensemble formant module de toit suivant la revendication 7, **caractérisé en ce que** le module (3) de toit est, en la position d'installation, appliqué à la traverse (1) de toit exclusivement par les dômes (14, 14') d'appui.

9. Ensemble formant module de toit suivant l'une des revendications 1 à 6, **caractérisé en ce que** la traverse (1) de toit a du côté tourné vers le module (3) de toit des dômes d'appui, qui sont en saillie vers le module (3) de toit et sur lesquels le module (3) de toit est appliqué en la position d'installation.

10. Ensemble formant module de toit suivant la revendication 9, **caractérisé en ce que** le module (3) de toit est appliqué, en la position d'installation, exclusivement sur les dômes d'appui.

11. Ensemble formant module de toit suivant l'une des revendications 7 à 10, **caractérisé en ce que** les éclisses (6) de suspensions forment les dômes (14) d'appui.

12. Ensemble formant module de toit suivant l'une des revendications précédentes, **caractérisé en ce que** les éléments de liaison sont des vis, qui pénètrent dans des évidements du module (3) de toit, qui peuvent être appuyées sur le module (3) de toit par leur tête (16) de vis et qui peuvent être vissées dans des taraudages (15) de la traverse (1) de toit.

13. Ensemble formant module de toit suivant la revendication 12, **caractérisé en ce que** les évidements débouchent du côté de l'habitacle dans des chambres (17) du module (3) de toit, les chambres pouvant être fermées vers l'habitacle par des capots (18) de recouvrement.

14. Ensemble formant module de toit suivant la revendication 13, **caractérisé en ce que** les capots (18) de recouvrement sont articulés au module (3) de toit et peuvent pivoter entre une position ouverte ouvrant les chambres (17) et une position fermée recouvrant les chambres (17).

15. Ensemble formant module de toit suivant l'une des revendications précédentes, **caractérisé en ce que** les interfaces pour la liaison électrique avec le réseau de bord sont disposées du côté du module (3) de toit éloigné de l'habitacle.

16. Ensemble formant module de toit suivant l'une des revendications précédentes, **caractérisé en ce que** les interfaces pour la liaison électrique avec le réseau de bord sont des liaisons à enfichage.

17. Ensemble formant module de toit suivant l'une des revendications précédentes, **caractérisé en ce que** le module (3) de toit comporte un système d'assistance à la conduite à base de caméra et/ou un système optique de classification des occupants d'un véhicule et/ou un détecteur de pluie et/ou un détecteur (22) de chocs et/ou un détecteur de lumière et/ou un affichage et/ou une antenne.
